# EUROPEAN PATENT APPLICATION

(11) **EP 3 333 788 A1**
(43) Date of publication of application: **13.06.2018**
(21) Application number: 16202537.3
(22) Date of filing: 06.12.2016
(51) Int. Cl.: G06Q 20/20, G06Q 20/40

(54) **METHOD AND SYSTEM FOR PROVIDING AN INTERACTIVE INTERFACE FOR MULTIPLE POINT-OF-SALE DEVICES**

(71) Applicant: MASTERCARD INTERNATIONAL, INC., Purchase, NY 10577-2509 (US)
(72) Inventor: Lynch, Richard, Killmallock (IE)
(74) Representative: FRKelly

(57) **Abstract**

Provided are a method and system for providing an interactive interface for multiple point-of-sale devices. The method comprises retrieving identifiers from a plurality of point-of-sale-devices. Retrieving geo-location data from transaction data associated with the plurality of point-of-sale devices. Processing the retrieved identifiers and the retrieved geo-location data to generate processed data. Generating the interactive point-of sale interface from the processed data; wherein the interactive point-of sale interface comprise a network topology representative of the point-of-sale-devices and a diagrammatic representation of a geographic location associated with the point-of-sale-devices.

## Description

### Field of the Invention

The present disclosure relates to a method and system for providing an interactive interface for multiple point-of-sale (POS) devices. More particularly, but not exclusively, it relates to a method and system for geograpically mapping multiple POS devices on a payment network to aid monitoring thereof and for enhancing security.

### Background of the Disclosure

Currently there is no mechanism to understand the topology of a point-of-sales network. Thus it is difficult to monitor the performance of POS devices and to determine if remotely located POS devices are online or offline. Furthermore it is difficult to ascertain whether POS devices are operating correctly or malfunctioning. Additionally, it is difficult to ascertain whether the number of transactions being conducted at particular POS devices is within expected norms. Nefarious individuals may be motivated to tamper with POS devices in an effort to profit from the transactions which are conducted by the POS devices which may compromise the security of the transactions. Thus it desirable that POS devices are continuously monitored to enhance security.

There is therefore a need to provide a method and system for providing an interactive interface for multiple point-of-sale devices which addresses at least some of the drawbacks of the prior art.

### Summary of the Invention

In accordance with an aspect of the present invention; a computer implemented method provides an interactive point-of sale interface; the method comprising:
retrieving identifiers from a plurality of point-of-sale (POS) devices;
retrieving geo-location data from transaction data associated with the plurality of point-of-sale devices;
processing the retrieved identifiers and the retrieved geo-location data to generate processed data; and
generating the interactive interface from the processed data; wherein the interactive interface comprises a
network topology representative of the plurality of point-of-sale devices and a diagrammatic representation of a geographic location associated with the point-of-sale devices.

In one embodiment, the diagrammatic representation comprises a map.

In another embodiment, the interactive point-of sale interface includes a zooming fuction to allow details of the network topology and the diagrammatic representation to zoom on a visual display unit.

In another embodiment, the network topology includes interactive nodes which provide an interface for communicating with their associated point-of-sale devices over a payment network.

In one embodiment, the respective interactive nodes have an associated indicia to indicate operational status. Advantageously, the indicia reflects transaction activity. In an exemplary embodiment, the indicia changes if the transaction acitivity is determined to be outside a predetermined threshold.

In a further embodiment, the transaction activity is determined by calculating the number of transactions at the respective POS devices over a predetermined period. Advantageously, the calculated number of transactions is compared to historical data to determine if the respective POS devices have a normal operating status. In one example, the historical data comprises the number of transactions conducted at the respective POS devices over a historial time period.

In another embodiment, the indicia are colour coded.

In one embodiment, an alert is generated if it is determined that the respective POS devices are operating outside predetermined operating conditions. Advantageously, one or more POS devices are deactivated in response to the alert.

In accordance with another aspect of the invention, a computer-readable medium is provided comprising non-transitory instructions which, when executed, cause a processor to provide an interactive point-of-sale interface, the method comprising:
retrieving identifiers from a plurality of point-of-sale (POS) devices;
retrieving geo-location data from transaction data associated with the plurality of point-of-sale devices;
processing the retrieved identifiers and the retrieved geo-location data to generate processed data; and
generating the interactive interface from the processed data; wherein the interactive interface comprises a
   network topology representative of the plurality of point-of-sale devices and a diagrammatic representation of a geographic location associated with the point-of-sale devices.

In a further aspect of the invention there is provided a system for providing an interactive point-of-sale interface; the system comprising one or more modules which are configured to:
retrieve identifiers from a plurality of point-of-sale-devices;
retrieve geo-location data from transaction data associated with the plurality of point-of-sale devices;
process the retrieved identifiers and the retrieved geo-location data to generate processed data; and
generate the interactive point-of-sale interface from the processed data; wherein the interactive point-of-sale interface comprises a network topology representative of the point-of-sale-devices and a diagrammatic representation of a geographic location associated with the point-of-sale-devices.

In another aspect of the invention there is provided a server being co-operable with a plurality of point-of-sale devices for providing an interactive point-of-sale interface; the server comprising one or more modules which are configured to
query a plurality of point-of-sale devices for retrieving identifiers from the plurality of point-of-sale-devices;
query a payment server for retrieving geo-location data from transaction data associated with the plurality of point-of-sale devices;
process the retrieved identifiers and the retrieved geo-location data to generate processed data; and
generate the interactive point-of-sale interface from the processed data; wherein the interactive point-of sale interface comprises a network topology representative of the point-of-sale-devices and a diagrammatic representation of a geographic location associated with the point-of-sale-devices.

### BRIEF DESCRIPTION OF THE DRAWINGS

Embodiments of the present invention will now be described, by way of example only, with reference to the accompanying drawings, in which:
FIG. 1 is a diagram of an exemplary payment processing system;
FIG. 2 is a diagram of exemplary payment infrastructure used for conducting a transaction via the payment processing system of Figure 1;
FIG. 3A-3B are exemplary diagrams of payment processing systems;

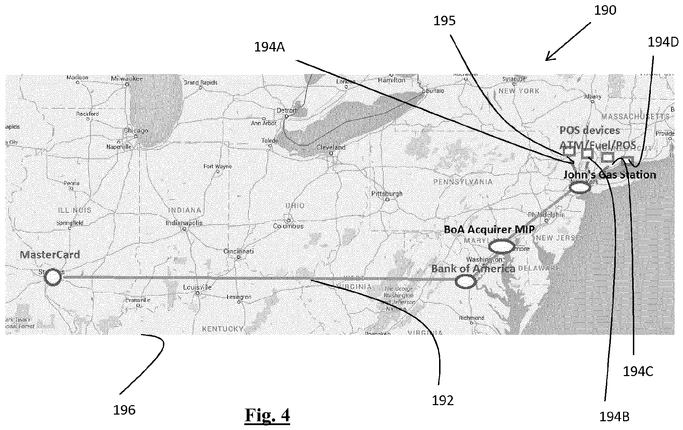

FIG. 4 is a diagrammatic illustration of an interactive point-of-sales interface in accordance with the present teaching;
FIG. 5 is a flow chart illustrating exemplary steps for generating a POS interface of Fig. 4;
FIG. 6 is a diagrammatic illustration of exemplary details of the POS interface of Fig. 4; and
FIG. 7 is a diagrammatic illustration of exemplary details of the POS interface of Fig. 4.

### DESCRIPTION OF THE PREFERRED EMBODIMENT

Embodiments of the present invention will now be described with reference to an exemplary system for providing an interactive interface for multiple point-of-sale devices. It will be understood that the exemplary interactive interface is provided to assist in an understanding of the present teaching and is not to be construed as limiting in any fashion. Furthermore, modules or elements that are described with reference to any one Figure may be interchanged with those of other Figures or other equivalent elements without departing from the spirit of the present teaching.

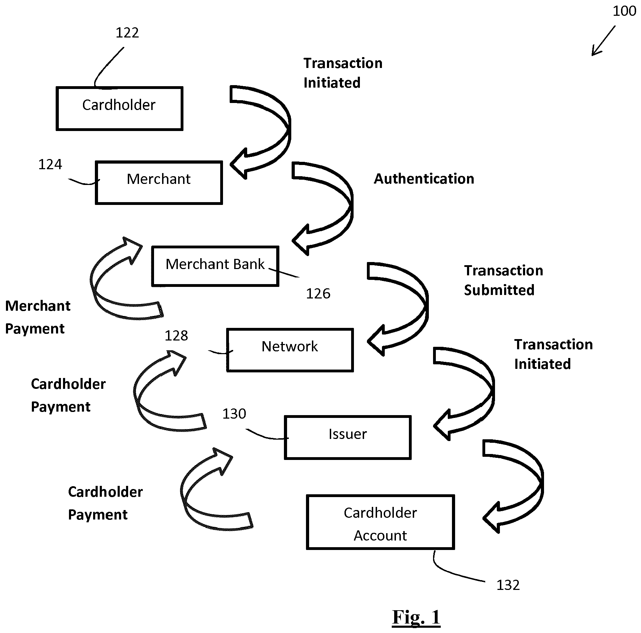

Figure 1 is a schematic diagram illustrating an exemplary transaction card system 100 for facilitating payment-by-card transactions. In an exemplary financial transaction card system, a financial institution typically called the "issuer" issues a transaction card, such as a credit card, to a cardholder 122. The cardhold 122 uses the transaction card to make payment for a purchase from a merchant 124. To accept payment with the transaction card the merchant 124 establishes an account with a financial institution that is part of the financial payment system. This financial institution is usually called the "merchant bank," the "acquiring bank," or the "acquirer." When cardholder 122 makes payment for a purchase with a transaction card, merchant 124 requests authorization from a merchant bank 126 for the amount of the purchase. The request is typcially performed through the use of a point-of-sale terminal, which reads cardholder's 122 account information from a magnetic stripe, a chip, or embossed characters on the transaction card and communicates electronically with the transaction processing computers of merchant bank 126.

Using a payment card network 128, computers of the merchant bank 126 will communicate with computers of an issuer bank 130 to determine whether cardholder's 122 account 132 is in sufficient funds and the request for authorization will be declined or accepted. If the request is accepted, an authorization code is issued to merchant 124.

When a request for authorization is accepted, the amount of cardholder's 122 account 132 is decreased. Once the purchase has been made, a clearing process occurs to transfer additional transaction data related to the purchase among the parties to the transaction, such as merchant bank 126, payment card interchange network 128, and issuer bank 130. More specifically, during and/or after the clearing process, additional data, such as a time of purchase, a merchant name, a type of merchant, purchase information, cardholder account information, a type of transaction, itinerary information, information regarding the purchased item and/or service, and/or other suitable information, is associated with a transaction and transmitted between parties to the transaction as transaction data, and may be stored by any of the parties to the transaction.

Once a transaction is authorized and cleared, the transaction is settled among merchant 124, merchant bank 126, and issuer bank 130. Settlement refers to the transfer of financial data or funds among merchant's 124 account, merchant bank 126, and issuer bank 130 related to the transaction. Usually, transactions are captured and accumulated into a "batch," which is settled as a group. More specifically, a transaction is typically settled between issuer bank 130 and payment card interchange network 128, and then between payment card interchange network 128 and merchant bank 126, and then between merchant bank 126 and merchant 124.

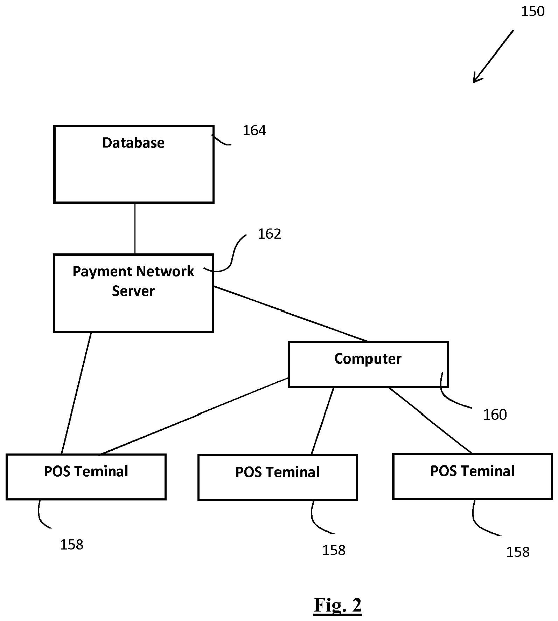

Figure 2 is a block diagram of an exemplary processing system 150 including point-of-sale (POS) terminals 158, which may be connected to client systems 160 and may be connected to a payment server system 162. POS terminals 158 are interconnected to the Internet through many interfaces including a network, such as a local area network (LAN) or a wide area network (WAN), dial-in-connections, cable modems, wireless modems, and special high-speed ISDN lines. POS terminals 158 could be any device capable of reading information from a payment transaction card.

Database 164 may store transaction data generated as part of sales activities conducted over the processing network including data relating to merchants, account holders or customers, issuers, acquirers, and/or purchases made. Database 164 may also store account data including at least one of a cardholder name, a cardholder address, an account number, and other account identifier. Database 164 may also store merchant data including a merchant identifier that identifies each merchant registered to use the network, and instructions for settling transactions including merchant bank account information. Database 164 may also store purchase data associated with items being purchased by a cardholder from a merchant, and authorization request data.

POS terminals 158 may be associated with a participating merchant 124 or may be a computer system and/or mobile system used by a cardholder making an on-line purchase or payment. Server system 162 may be associated with payment card interchange network 128. In the exemplary embodiment, server system 162 is associated with a network interchange, such as payment card interchange network 128. Server system 162 may be used for processing transaction data. In addition, client systems 160 and/or POS terminal 158 may include a computer system associated with at least one of an online bank, an acquirer bank, an acquirer processor, an issuer bank associated with a transaction card, an issuer processor, a remote payment system.

Using payment card interchange network 128, the computers of the merchant bank 126 or the merchant processor will communicate with the computers of the issuer bank to determine whether the cardholder's account is in good standing and whether the purchase is covered by cardholder's available credit line. Based on these determinations, the request for authorization will be declined or accepted. If the request is accepted, an authorization code is issued to the merchant.

The financial transaction cards or payment cards discussed herein may include credit cards, debit cards, a charge card, a membership card, a promotional card, prepaid cards, and gift cards. These cards can all be used as a method of payment for performing a transaction. As described herein, the term "financial transaction card" or "payment card" includes cards such as credit cards, debit cards, and prepaid cards, but also includes any other devices that may hold payment account information, such as mobile phones, personal digital assistants (PDAs), fobs, or other devices, etc.

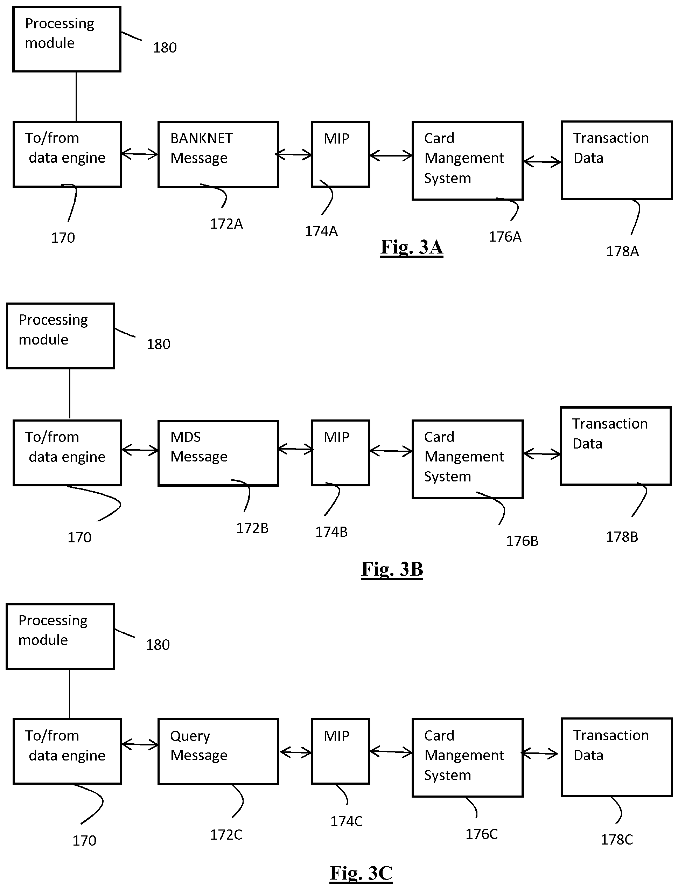

Typically two systems are used for processing payment card transactions. The first, represented in Figure. 3A, is the BANKNET authorization system. The BANKNET system is characterized by its use of two sequential messages in order to complete any given transaction. The first message is an authorization message, which seeks an authorization to complete a given transaction from the institution holding the account on which the card is issued. The response to the authorization is passed on to the merchant, for example. A second message is sent to 'clear' the transaction once the merchant has provided the goods or services bargained for, and initiates the transfer of funds according to the previous authorization.

Card transactions may also be processed through a payment network known as Merchant Data Service (MDS) as illustrated in Figure 3B. The MDS network is characterized in that transactions are processed in a single transaction message and response (e.g., approve or decline), rather than two messages as described above with reference to the BANKNET system depicted in Figure 3A.

In the payment systems of Figures 3A and 3B, the message protocol may be configured to allow the message from a data engine 170 to be of an inquiry nature, rather than a message seeking to initiate a transaction on the account. Moreover, the communication protocol further provides for data to be requested, for example as part of the authorization inquiry, with the response message from the issuer including the requested payload data. In those circumstances, the message is transmitted to the issuing bank, i.e., the entity responsible for issuing the payment card and which also holds the credit or demand deposit account on which the payment card draws, via either the BANKNET or MDS systems, as applicable to the particular issuer.

The inquiry message 172a, 172b, from the data engine 170 may be of an inquiry nature only, i.e., not of a type initiating a transaction. The inquiry message 172a, 172b is routed through the MasterCard Interface Processor (MIP) 174a, 174b. The inquiry message 172a, 172b from the data engine 170 is routed by the issuer card management system 176a, 176b. The inquiry message 172a, 172b will include a request from the data storage 178a , 178b for recent transaction data on the account. The response to the data engine 170 inquiry message from the issuer will include the requested payload transactional data. This transactional data is then passed to a processing module 180 by the data engine 170 which is configured to generate a topology of the payment infrastucture.

In the exemplary embodiment; the payload may include identifiers associated with the point-of-sale-devices; and geo-location data from transaction data associated with the of point-of-sale devices. The processing module 180 is configured to process the retrieved identifiers and the retrieved geo-location data to generate processed data. Additionally, processing module 180 generates an interactive interface 190 from the processed data which comprises a network topology 192 representative of the point-of-sale-devices 194A-194D and a diagrammatic representation of a geographic location 195 associated with the point-of-sale-devices. The interactive interface 190 is suitable for displaying on a visual display unit 196. The diagrammatic representation may comprise a map. The interactive interface may include a zooming fuction to allow details of the network topology and the diagrammatic representation to appear larger on a visual display unit. The network topology may include interactive nodes which provide an interface for communicating with their associated point-of-sale devices over a payment network.

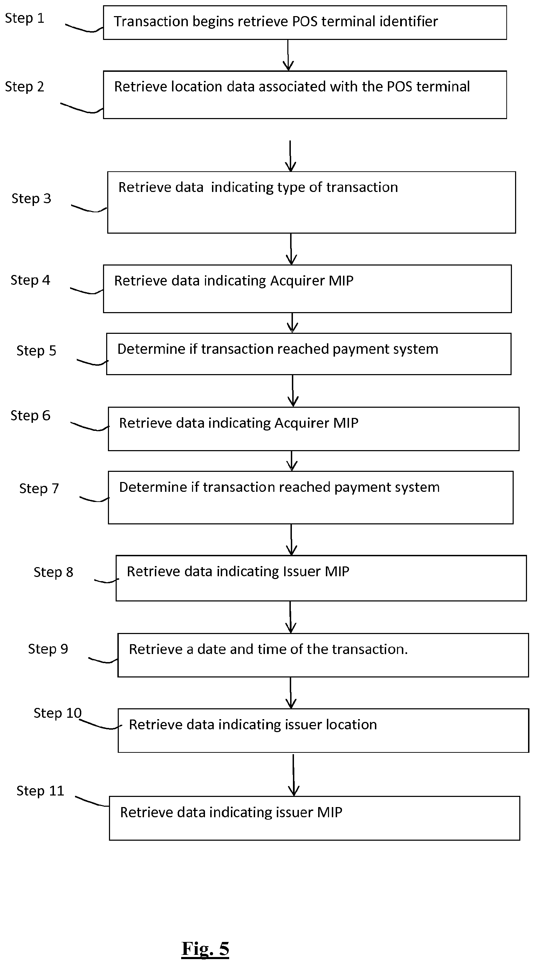

Figure 3C illustrates a generic payment system for processing a payment transaction which may be compatible with protocols other than BANKNET or MDS. The data engine 170 may be configured to implement the exemplary steps listed in flow chart of Figure 5, for example. It is not intended to limited the present teaching to the specific steps listed in the flowchart which are provided as possible examples. A query message 172C is generated to implement each of the actions associated with steps 1 to 11. A first query message associated with step 1 is configured to extract a POS terminal identifier. A second query message associated with step 2 is configured to obtain the location of the POS termnal. A third query message associated with step 3 is configured to determine a type of transaction. A fourth query message associated with step 4 is configured to determine the type of POS terminal. A fifth query message associated with step 5 is configured to extract an acquiring institution code. A sixth query message associated with step 6 is configured to determine an acquirer MIP. A seventh query message associated with step 7 is configured to determine a status of the transaction. A eigth query message associated with step 8 is configured to determine an issuer MIP. A ninth query message associated with step 9 is configured to extract a date and time of the transaction. A tenth query message associated with step 10 is configured to extract data indicating the location of the issuer. An eleventh query message associated with step 11 is configured to extract data indicating an issuer MIP.

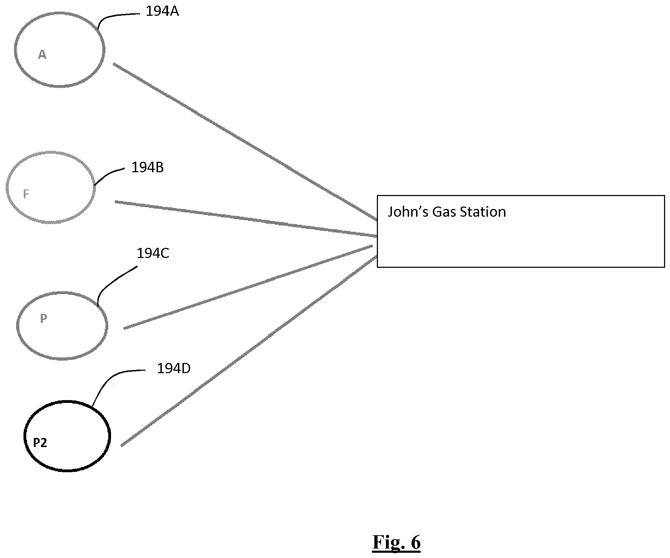

Figure 6 illustrates nodes A, F, P and P2 which represent different POS terminals194A-194D in a particalar location on the interactive interface 190. In this example, the location is a gas station. Each POS node may be displayed differently, for example, each ATM terminal 194A has indicia represented by symbol of 'A'. A fuel dispenser terminal 194B has indicia represented by symbol 'F'. Regular POS terminals have indicia represented by symbols 'P' and 'P2'. It will be appreciated that different indicia other than smybols may be used such as shapes. Different shapes may be used to represent different types of POS terminals. The nodes may be colour coded and a change of colour could represent a change in the operational status of the POS terminals. Thus a colour change may indicate that a POS terminal is malfunctioning or a suspected security breach has occured.

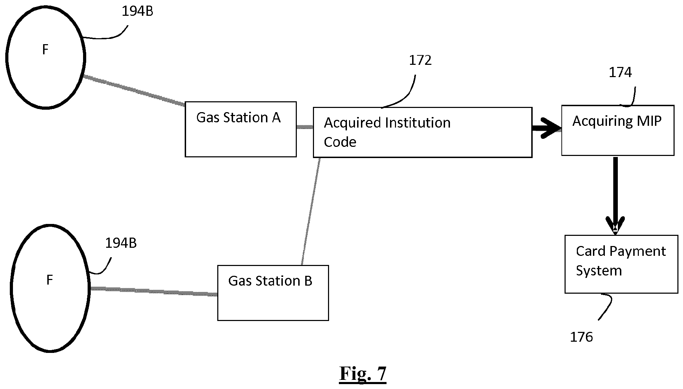

Figure7 illustrates two similar nodes from different locations. The number of transactions at each POS terminal is recorded. The processing module 180 is configured to compare transaction activity to determine if some POS terminals have a transaction activity outside expected norms. The processing module 180 may utilise transaction activity data recorded at different locations for the same type of terminals to determine unusual activity. In this way, by monitoring the transaction activity data allows anomalies to be quickly and easily identified. If an anomaly is identified, the node on the interactive interface 190 may change colour, for example. In Figure7, the transaction activity data from two gas stations 'A' and 'B' are compared. For example, gas stations 'A' and 'B' may be on opposites site of the same road. The foot fall for both stations would be expected to be similar due to their geographic proximity. It will therefore be appreciated that the respective interactive nodes have an associated indicia to indicate operational status. The indicia may reflect transaction activity and change if the transaction acitivity is determined to be outside a predetermined threshold. In one example, the transaction activity is determined by calculating the number of transactions at the respective POS devices over a predetermined period. The calculated number of transactions is compared to historical data to determine if the respective POS devices have a normal operating status. The historical data may comprise the number of transactions conducted at the respective POS devices over a historial time period. An alert may be generated by the processing module if is determined that the respective POS devices are operating outside predetermined operating conditions. One or more POS devices may be deactived in response to the alert.

It will be understood that what has been described herein is an exemplary system for providing an interactive interface. While the present disclosure has been described with reference to exemplary arrangements it will be understood that it is not intended to limit the disclosure to such arrangements as modifications can be made without departing from the spirit and scope of the present teaching. The method of the present teaching may be implemented in software, firmware, hardware, or a combination thereof. In one mode, the method is implemented in software, as an executable program, and is executed by one or more special or general purpose digital computer(s). The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

It will be appreciated that the system may be implemented using cloud or local server architecture. In this way it will be understood that the present teaching is to be limited only insofar as is deemed necessary in the light of the appended claims. In one exemplary embodiment, the method includes retrieving identifiers from a plurality of point-of-sale-devices; retrieving geo-location data from transaction data associated with the plurality of point-of-sale devices; processing the retrieved identifiers and the retrieved geo-location data to generate processed data; and generating the interactive interface from the processed data; wherein the interactive interface comprises a network topology representative of the multiple point-of-sale-devices and a diagrammatic representation of a geographic location associated with the point-of-sale-devices.

It should be emphasized that the above-described embodiments of the present teaching, particularly, any "preferred" embodiments, are possible examples of implementations, merely set forth for a clear understanding of the principles. Many variations and modifications may be made to the above-described embodiment(s) without substantially departing from the spirit and principles of the present teaching. All such modifications are intended to be included herein within the scope of this disclosure and the present invention and protected by the following claims. For example, steps associated with the processes described herein can be performed in any order, unless otherwise specified or dictated by the steps themselves. The present disclosure is intended to embrace all such alternatives, modifications and variances that fall within the scope of the appended claims.

Similarly the words comprises/comprising when used in the specification are used to specify the presence of stated features, integers, steps or components but do not preclude the presence or addition of one or more additional features, integers, steps, components or groups thereof.

## Claims

1. A computer implemented method for providing an interactive interface for multiple point-of-sale devices (158); the method comprising:
retrieving identifiers from a plurality of point-of-sale devices (158);
retrieving geo-location data from transaction data (178A-178B) associated with the plurality of point-of-sale devices (158);
processing the retrieved identifiers and the retrieved geo-location data to generate processed data; and
generating the interactive interface (190) from the processed data; wherein the interactive interface (190) comprises a network topology (192) representative of the plurality of point-of-sale-devices (158) and a diagrammatic representation of a geographic location(195) associated with the point-of-sale-devices (158).

2. A computer implemented method, wherein the diagrammatic representation comprises a map.

3. A computer implemented method of claim 1 or 2; wherein the interactive interface (190) includes a zooming fuction to allow details of the network topology (192) and the diagrammatic representation to zoom on a visual display unit (196).

4. A computer implemented method of any one of claims 1 to 3; wherein the network topology (192) includes interactive nodes (A, F, P, P2) which provide an interface for communicating with their associated point-of-sale devices over a payment network (162).

5. A computer implemented method of any one of claims 1 to 4; wherein the respective interactive nodes have an associated indicia to indicate operational status.

6. A computer implemented method of claim 5; wherein the indicia reflects transaction activity.

7. A computer implemented method of claim 6; wherein the indicia changes if the transaction acitivity is determined to be outside a predetermined threshold.

8. A computer implemented method of claim 6; wherein the transaction activity is determined by calculating the number of transactions at the respective POS devices (158) over a predetermined period.

9. A computer implemented method of claim 8; wherein the calculated number of transactions is compared to historical data to determine if the respective POS devices (158) have a normal operating status.

10. A computer implemented method of claim 9, wherein the historical data comprises the number of transactions conducted at the respective POS devices (158) over a historial time period.

11. A computer implemented method of any one of claims 5 to 10; wherein the indicia are colour coded.

12. A computer implemented method of any one of claims 1 to 11; wherein an alert is generated if it is determined that the respective POS devices (158) are operating outside predetermined operating conditions; or an alert is generated if it is determined that the respective POS devices (158) are operating outside predetermined operating conditions; and wherein one or more POS devices are deactivated in response to the alert.

13. A computer-readable medium comprising non-transitory instructions which, when executed, cause a processor to carry out a method according to any one of claims 1 to 12.

14. A system for providing an interactive interface; the system comprising one or more modules which are configured to:
retrieve identifiers from a plurality of point-of-sale-devices (158);
retrieve geo-location data from transaction data associated with the plurality of point-of-sale devices (158);
process the retrieved identifiers and the retrieved geo-location data to generate processed data; and
generate the interactive interface (190) from the processed
data; wherein the interactive interface comprises a network topology (192) representative of the plurality of point-of-sale-devices (158) and a diagrammatic representation of a geographic location (195) associated with the point-of-sale-devices (158).

15. A server (180) being co-operable with a plurality of point-of-sale devices (158) for providing an interactive point-of sale interface (190); the server (162) comprising one or more modules which are configured to
query a plurality of point-of-sale devices for retrieving identifiers from the plurality of point-of-sale-devices (158);
query a payment server (162) for retrieving geo-location data from transaction data associated with the plurality of point-of-sale devices (158);
process the retrieved identifiers and the retrieved geo-location data to generate processed data; and
generate the interactive point-of sale interface (190) from the processed data; wherein the interactive point-of sale interface (190) comprises a network topology (192) representative of the point-of-sale-devices and a diagrammatic representation of a geographic location (195) associated with the point-of-sale-devices (158).
